# EUROPÄISCHE PATENTSCHRIFT

(11) **EP 2 766 623 B1**
(45) Veröffentlichungstag und Bekanntmachung des Hinweises auf die Patenterteilung: **21.06.2017**
(21) Anmeldenummer: 12770065.6
(22) Anmeldetag: 26.09.2012
(51) Int. Cl.: F16D 23/02, F16D 23/06

(54) **SYNCHRONISATIONSEINRICHTUNG**
SYNCHRONIZATION DEVICE
SYSTÈME DE SYNCHRONISATION

(30) Priorität: 13.10.2011 DE 102011084417; 24.04.2012 DE 102012206711
(43) Veröffentlichungstag der Anmeldung: 20.08.2014
(73) Patentinhaber: Ford Global Technologies, LLC, Dearborn, MI 48126 (US)
(72) Erfinder: RÖPER, Hartmut, 40789 Monheim (DE)
(74) Vertreter: Dörfler, Thomas
(86) Internationale Anmeldenummer: PCT/EP2012/068952
(87) Internationale Veröffentlichungsnummer: WO 2013/053599

(56) Entgegenhaltungen:
- JP-A- 5 039 815
- US-A- 4 732 247
- US-A- 5 135 087

## Beschreibung

Die Erfindung betrifft eine Synchronisationseinrichtung für ein Getriebe, mit einer Schaltmuffe, einem Sperrsynchronring und einem Schaltrad, wobei in einem Kraftflussbereich zwischen Sperrsynchronring und Schaltrad an mindestens einem Bauteil Rampen zur Erzeugung einer zur Welle axialen Servokraft in einer Servokraftrichtung von dem Sperrsynchronring zu dem Schaltrad hin vorgesehen sind.

Bei bekannten Synchronisationseinrichtungen ist die Schaltmuffe radial außen drehfest mit einem drehfest auf einer Welle gelagerten Synchronkörper verbunden, jedoch axial verschiebbar zum zugeordneten Schaltrad hin angeordnet, wobei das Schaltrad als Losrad auf der Welle gelagert ist. Zur drehfesten Verbindung von Synchronkörper und Schaltrad mittels einer beide verbindende Verzahnung der Schaltmuffe müssen die Drehzahlen von Synchronkörper und Schaltrad in einem Synchronisationsvorgang angeglichen bzw. synchronisiert werden. Der Sperrsynchronring ist mit einer Sperrverzahnung versehen und zur Vorsynchronisierung umfänglich begrenzt beweglich axial an dem Synchronkörper angekoppelt. Zur Synchronisation wird die Schaltmuffe unter Einleitung einer axialen Schaltkraft in Richtung des anzukoppelnden Schaltrades kraftwirksam gegen den Sperrsynchronring bewegt, der seinerseits zur Drehzahlangleichung über Reibung eine Umfangskraft oder Drehmoment zum Abbremsen oder Beschleunigen des Schaltrades auf die Drehzahl des Synchronkörpers auf das Schaltrad ausübt. Solange kein Gleichlauf erzielt ist, ist der Sperrsynchronring mit seiner Sperrverzahnung so zu der Verzahnung der Schaltmuffe ausgerichtet, dass diese gegen die Sperrverzahnung anschlägt und dadurch axial gesperrt wird. Mit Gleichlauf kann der Sperrsynchronring infolge seiner umfänglich begrenzten Beweglichkeit so zu der Verzahnung der Schaltmuffe an schiefen Ebenen in eine Synchronstellung hinein gedreht werden, in der die Verzahnungen von Schaltmuffe und Sperrsynchronring sowie die am Schaltrad vorgesehene Kupplungsverzahnung axial fluchtend sind und die Schaltmuffe, den Sperrsynchronring unter Verzahnungseingriff übergreifend, in die Kupplungsverzahnung eingreifen und damit eine drehfeste Verbindung zwischen Synchronkörper und Schaltrad herstellen kann.

Zur Verringerung der über die Schiebmuffe einzuleitenden axialen Schaltkraft und/oder zur Verkürzung des Synchronisationsvorganges ist bei neueren Synchronisationseinrichtungen eine axiale Servokraft erzeugende Selbstverstärkung vorgesehen.

In der US 5 135 087 C und US 4 732 247 C wird jeweils eine gattungsgemäße Synchronisationseinheit mit den Rampen zur Erzeugung der axialen Servokraft beschrieben. Hierbei greifen Sperrsynchronring und Synchronring bzw. Sperrsynchronring und Schaltrad über radiale Vorsprünge mit Rampen ineinander.

Alternativ kann die Selbstverstärkung, wie in der DE 10 2005 056 827 A1 beschrieben, als Federvorrichtung mit Federelementen ausbildet sein, wobei die Federelemente mit Verschiebung der Schaltmuffe gegen den Sperrsynchronring denselben mit einer Servokraft zum Schaltrad hin drückt.

In den Druckschriften EP 1 219 847 B1, EP 2 169 250 A1 und EP 1 900 956 A2 wird eine Servokraft mittels umfänglich gleich beabstandeter Sperrstücke erzeugt, die zur Vorsynchronisierung zugleich eine übliche Sperrfunktion zum Sperren der Schaltmuffe bei Nichtgleichlauf erfüllen. Die Sperrstücke stützen sich während des Synchronisierens mit einer Rampe als Kraftübertragungsfläche auf einer entsprechenden Rampe auf dem Synchronkörper in Umfangsrichtung ab und koppeln über die Rampen die axiale Servokraft in Servokraftrichtung den Synchronring ein. Dieser Vorgang wird auch in den VDI Bericht No. 1393 von 1998 ("Low Force Boost Concept for Baulk Ring Synchronizers") beschrieben. Nachteilig hieran sind, neben einem komplexen Aufbau, eine Anfälligkeit hinsichtlich Axialtoleranzen und erhöhtem Synchronringverschleiß. Wegen der Winkelpositionen der Sperrflächen müssen diese entsprechend breit ausgebildet sein, welches wiederum eine lange Überschiebphase, damit einen langen Hub der Schaltmuffe und letztlich einen erhöhten Kraftaufwand erfordert.

In der JP 5 039815 A wird eine nicht-gattungsgemäße Synchronisationseinrichtung offenbart, in der die zur Vorsynchronisation eingesetzten Rampen in einem Kraftflussbereich zwischen Synchronkörper und Sperrsynchronring angeordnet und parallel zueinander ausgerichtet sind.

Aufgabe der Erfindung ist, eine gattungsgemäße Synchronisationseinrichtung bereitzustellen, die die Erzeugung einer an den Schaltvorgang optimierten Servokraft ermöglicht. Dennoch sollte die Synchronisationseinrichtung einfach aufgebaut und ferner wenig anfällig gegenüber Axialtoleranzen sein. Es soll eine geringe Anfälligkeit gegenüber Synchronringverschleiß ermöglicht werden. Zudem soll der Synchronisationsvorgang verkürzt werden.

Die gestellte Aufgabe wird erfindungsgemäß durch die Merkmale des Anspruches 1 gelöst. Vorteilhafte Weiterbildungen werden in den Unteransprüchen beschrieben. Die gestellte Aufgabe wird bereits dadurch gelöst, dass erste Rampen zur Servokrafterzeugung beim Herunterschalten aus einem höheren Gang in einem ersten Winkel zur Welle und zweite Rampen zur Servokrafterzeugung beim Heraufschalten aus einem niedrigeren Gang in einem zweiten Winkel zur Welle angeordnet sind, wobei der erste Winkel ungleich zu dem zweiten Winkel ist und die ersten Rampen asymmetrisch zu den zweiten Rampen ausgebildet sind.

Während der Synchronisation wirkt aufgrund von Nichtgleichlauf der Bauteile mit den zusammenwirkenden Rampen eine Umfangskraft auf die Rampen, die, entsprechend ihrer axialen Winkelanstellung, eine axiale Servokraft bewirkt. Dies ist detaillierter weiter unten erläutert. Es ist erfindungsgemäß vorgesehen, dass die ersten Rampen asymmetrisch zu den zweiten Rampen ausgebildet sind. Somit kann während der Synchronisation mittels der ersten Rampen eine axiale Servokraft erzeugt werden, die aufgrund der zu der Winkelanstellung der zweiten Rampen anderen Winkelanstellung von der über die zweiten Rampen erzeugten axialen Servokraft verschieden ist. Infolge der Asymmetrie der Rampen können bei Schalten auf ein bestimmtes Schaltrad unterschiedlich hohe Servokräfte erzeugt werden. Über die unterschiedlichen Rampen können somit Unterschiede hinsichtlich erforderlicher Servokräfte bei unterschiedlichen Gängen und/oder hinsichtlich der "Schaltungsrichtung", berücksichtigt werden, d.h. ob aus einem höheren oder einem niedrigeren Gang in den betreffenden Gang mit den Servokräfte erzeugenden Rampen geschaltet wird. Da hier lediglich eine unterschiedliche axiale Anstellung der ersten und zweiten Rampen notwendig ist, ist der Aufbau der Synchronisationseinrichtung entsprechend einfach gehalten.

Zwar kann bei einem Synchronisationsvorgang mittels einer erhöhten Servokraft eine erforderliche Schaltzeit entsprechend erniedrigt werden, gleichzeitig kann sich aber ein erhöhter Verschleiß einstellen. Dank der asymmetrischen Rampen können Servokraft und Schaltzeit bezogen auf den Schaltvorgang, d.h. ob ein "Heraufschalten" oder ein "Herunterschalten" erfolgt, gezielt optimiert werden. Eine Asymmetrie der Verstärkungsrampen ist besonders vorteilhaft, wenn große Unterschiede hinsichtlich einer erforderlichen Axialkraft zwischen Herauf- und Herunterschalten jeweils in einem bestimmten Gang hinein vorliegen.

Die Höhe der Winkelanstellung der Rampen an sich sowie deren Asymmetrie hängen stark von den baulichen Gegebenheiten des jeweiligen Getriebes ab. Ferner kann als Kriterium ein erwartetes Schaltverhalten eines Fahrers genommen werden, beispielsweise ob ein rasches, hartes, "sportliches" Schalten oder ein eher weiches Schalten erwünscht ist. Insofern sind Schaltkraft und Schaltzeit als wesentliche Faktoren beim Schalten miteinander verknüpft. Dieselben können in einem Produkt aus Schaltkraft und Schaltzeit zu einem so genannten Schaltintegral mathematisch miteinander verknüpft werden. Dieses Schaltintegral kann somit über die Höhe der Winkelanstellung der asymmetrischen Rampen gezielt eingestellt werden.

Bei den heute üblichen Schaltgetrieben können große Kraftunterschiede zwischen Herauf- und Herunterschalten insbesondere in einen niedrigen Gang hinein auftreten. Dies gilt insbesondere für den ersten Gang und, falls vorhanden, für einen so genannten Kriechgang. Es ist von Vorteil, wenn der erste Winkel dann, wenn das Schaltrad in dem Getriebe für einen ersten Gang oder einen Kriechgang vorgesehen ist, größer als der zweite Winkel ist. Dies heißt, dass, bei gleicher Umdrehungszahldifferenz und damit gleicher Umfangskraft der über die Rampen kraftwirksam ineinander greifenden Bauteile, bei einem Herunterschalten beispielsweise aus dem zweiten Gang in den ersten Gang eine größere axiale Servokraft erzeugt wird als beim Heraufschalten aus einem N-Gang (Leerlauf) bzw. dem Kriechgang in den ersten Gang. Bei bestimmten Schaltgetrieben kann der erste Winkel einen Betrag aufweisen, der ein Mehrfaches des Betrages des zweiten Winkels ist. Der erste Winkel kann bis zu viermal, vorteilhaft bis zu dreimal oder doppelt so groß wie der zweite Winkel ausgelegt sein.

Der erste Winkel kann dann, wenn das Schaltrad in einem Getriebe für einen Gang beispielsweise größer der ersten Gang oder der zweite Gang vorgesehen ist, kleiner als der zweite Winkel sein. Dies heißt, dass, bei gleicher Umdrehungszahldifferenz und damit gleicher Umfangskraft der über die Rampen kraftwirksam ineinander greifenden Bauteile, bei dem Herunterschalten beispielsweise aus dem vierten Gang in den dritten Gang eine geringere axiale Servokraft erzeugt wird als beim Heraufschalten aus dem zweiten Gang in den dritten Gang. Der erste Winkel kann um mindestens 5°, vorteilhaft um mindestens 10° oder 20° kleiner als der zweite Winkel sein. Der erste Winkel kann maximal um 35° größer als der zweite Winkel sein. Mittels der in dem Kraftflussbereich vorgesehenen Rampen wird eine automatische Verstärkung der Schaltkraft, die Selbstverstärkung, erzeugt. Eine auf das Bauteil wirkende Umfangskraft ruft an den Rampen die axiale Servokraft hervor. Das Bauteil kann sich zu dem Sperrsynchronring hin oder zu dem Schaltrad hin abstützen. Sperrsynchronring und Schaltrad sind in dem Kraftflussbereich einbezogen. Das Bauteil kann der Sperrsynchronring und/oder das Schaltrad sein. Der Sperrsynchronring kann sich über die Rampen unmittelbar an dem Schaltrad abstützen. Zusätzlich oder alternativ kann das Bauteil zwischen Sperrsynchronring und Schaltrad angeordnet sein. Wegen der weiter unten näher erläuterten Anordnung der Rampen sind, wie im Stand der Technik, Axialtoleranzen weniger gravierend. Es können im geringen Maße zwischen oder an Schaltrad und/oder an Sperrsynchronring auftretende Axialtoleranzen durch Abgleiten an den Rampen sogar ausgeglichen werden.

Mittels der Anordnung der Selbstverstärkung in dem Kraftflussbereich kann allgemein das Niveau einer Vorsynchronisationskraft abgesenkt werden. Dadurch können Kraftspitzen, die im zeitlichen Schaltkraftverlaufwährend des Synchronisationsvorgangs insbesondere beim Ausrichten von Verzahnungen drehfest zu verbindender Bauteile üblicherweise auftreten, gemildert werden. Insgesamt kann ein gleichmäßiger Kraftverlauf über den während des Synchronisationsvorgangs erzielt werden, welches ein Schalten des Getriebes für einen Benutzer leichter und angenehmer macht.

Mittels der erfindungsgemäßen Maßnahme kann, in vorteilhafter Vereinfachung des Aufbaues der in Synchronisationseinrichtung, auf beispielsweise die zusätzliche Funktion des Sperrstückes, die der Selbstverstärkung, bzw. auf zusätzliche Federelemente am Synchronkörper verzichtet werden. Infolge der erfindungsgemäßen Anordnung der Rampen kann die Selbstverstärkung auch bei Synchronisationseinrichtungen ohne zusätzliche Sperrstücke erfolgen. Ferner wirkt die Selbstverstärkung wegen dieser Anordnung nicht, wie bei den Sperrstücken mit Selbstverstärkungsfunktion, unter erhöhtem Synchronringverschleiß unmittelbar gegen die Sperrverzahnung des Synchronringes. Da die Selbstverstärkung nicht wie im Stand der Technik mittels vorgesehener Sperrstücke erfolgt, können, wenn vorgesehen, die Sperrstücke entsprechend umfänglich kleiner dimensioniert sein, wodurch eine verlängerte Überschiebphase der Schiebemuffe vermieden werden kann. In diesem Kraftflussbereich werden die axialen Kräfte während der Synchronisierung im Wesentlichen durch Reibung an Reibungsflächen übertragen. Es kann eine vorgesehene Vorsynchronisierung zur Drehzahlangleichung von Schaltmuffe und Schaltrad zumindest zum Teil in dem oben definierten Kraftflussbereich angeordnet sein. Diese Vorsynchronisierung kann mit der Selbstverstärkung eine bauliche Einheit bilden. Nicht in den hier definierten Kraftflussbereich einbezogen ist ein Kraftübergang von der Schaltmuffe auf den Sperrsynchronring.

Die exakte Anordnung der Rampen in dem Kraftflussbereich zwischen dem Sperrsynchronring und dem Schaltrad hängt von dem prinzipiellen Aufbau der Synchronisationseinrichtung in diesem Kraftflussbereich ab. Prinzipiell kann die Erzeugung der Servokraft dort erfolgen, wo Bauteile beispielsweise mittels Steckverbindungen bewegungsdynamisch gekoppelt sind. Diese Bauteile können übliche Bauteile einer Sychronisationseinrichtung sein.

Die Synchronisationseinrichtung kann beispielsweise als Einfach-, Doppel- oder Dreifachkonussynchronisierung ausgebildet sein. Es kann beispielsweise zwischen dem Sperrsynchronring und dem Schaltrad zumindest ein Bauteil und/oder eine Bauelementgruppe mit mindestens einem Bauelement angeordnet sein. Hierbei kann, wie unten ausgeführt, das Bauteil ein übliches Bauteil der Einfach-, Doppel- oder Dreifachkonussynchronisierung sein, das jedoch zur Ausbildung der Rampen der Selbstverstärkung konstruktiv abgewandelt ist. Dieses Bauteil und/oder das Bauelement der Bauelementgruppe können sich zur Umwandlung einer auf dieses Bauteil und/oder das Bauelement wirkenden Umfangskraft (F_{U}) in die Servokraft (F_{S}) mittels der Rampen servokraftwirksam zu dem Sperrsynchronring hin oder zu dem Schaltrad hin abstützten.

Die Rampen können zum Ausgleich von Axialtoleranzen auch innerhalb eines bestimmten axialen Bereiches aneinander zur Anlage kommen, welches die Herstellungskosten entsprechend verringert. Die Größe dieses axialen Bereiches hängt unter anderem von der axialen Erstreckung der Rampen an. Verschleiß mindernd können die Rampen über einen möglichst großen Abschnitt ihrer axialen Erstreckung aneinander anliegen. Eventuell auftretende Axialtoleranzen der einzelnen Bauteile und/oder der Bauelementgruppe können in geringem Maße unaufwendig über ein Abgleiten an den Rampen ausgeglichen werden.

Zur rascheren Angleichung der Drehzahlen von Synchronkörper und Schaltrad können jeweils als Reibungsfläche der Sperrsynchronring in Servokraftrichtung hinten eine erste Reibkonusfläche und/oder das Schaltrad in Servokraftrichtung vorn eine zweite Reibkonusfläche aufweisen. Diese Reibkonusflächen können bei der Synchronisation aneinander reibend und selbstzentrierend ineinander greifen. Infolge der Servokraft können Sperrsynchronring und Schaltrad unter Erhöhung des Reibungsmomentes an ihren Reibkonen stärker gegeneinander gepresst, wodurch der Synchronisationsvorgang verkürzt und/oder der zum Synchronisationsvorgang in die Schaltmuffe einzubringende axiale Kraftaufwand verringert werden kann. Ferner kann eine entsprechend verstärkte Zentrierwirkung an den ineinander greifenden Konen erzielt werden..

Die Rampen können jeweils eine Flächennormale mit einer zur Welle axialen Richtungskomponente und einer zur Welle umfänglichen Richtungskomponente aufweisen. Somit kann über die Einstellung der Kraftübertragungsflächen, d. h. überdie Größe der axialen Richtungskomponente der Flächennormalen der Kraftübertragungsflächen, die Höhe der Selbstverstärkung bzw. der axialen Servokraft eingestellt werden.. Je steiler eine Kraftübertragungsfläche angestellt ist, d.h. je größer der eingeschlossene Winkel zwischen Kraftübertragungsfläche und Servokraftrichtung ist, desto höher ist jeweils der Anteil der axialen Kraftkomponente. Die Anstellung der Kraftübertragungsflächen sollte jedoch nicht einen bestimmten Winkel überschreiten, damit keine Selbsthemmung auftreten kann. Ein optimaler Winkel hängt stark von den konstruktiven Gegebenheiten ab. Damit zusammenwirkende Rampen kraftmechanisch günstig zur einer flächigen Anlage aneinander kommen können, können diese gleich angestellt sein.

Konstruktiv können die Rampen an zwei zumindest im Wesentlichen axial ineinander greifenden auf einem Radius angeordneten Übertragungselementen sein, wobei diese als eine Übertragungseinheit aufgefasst werden können. Die Übertragungselemente können eine axiale Öffnung mit umfänglichen Innenseitenflächen als Rampen und ein axialer Vorsprung mit umfänglichen Außenseitenflächen als Rampen sein. Der Vorsprung kann so in eine zugeordnete Öffnung eingreifen, dass er, abhängig von aktuell wirkenden Drehmomenten mit einer seiner umfänglichen Außenseitenflächen gleitverschieblich an einer der umfänglichen Innenseitenflächen der Öffnung anliegt. Bevorzugt sich der Vorsprung in axialer Richtung in die vorzugsweise in axialer Richtung geöffnete Öffnung. Damit können die beiden Übertragungselemente eine Steckverbindung ausbilden. Aus der Kräftemechanik kann abgeleitet werden, dass die Flächennormale der Rampe des Bauteiles, das in Servokraftrichtung gedrückt werden soll, mit einer axialen Richtungskomponente gegen Servokraftrichtung weist. Zum Eingriff können die Übertragungselemente einer Übertragungseinheit zweckmäßig radial gleich zur Welle beabstandet angeordnet sein. Vorsprung und Öffnung können bezüglich einer umfänglich-axialen Ebene ein schwalbenschwanzartiges oder ein trapezartiges, beispielesweise ein gleichschenkliges trapezartiges Profil aufweisen. An welcher umfänglichen Innenseitenfläche sich der Vorsprung bei der Synchronisation anliegt, hängt letztlich von der Richtung der zu synchronisierenden Differenzdrehzahl zum Gleichlauf hin ab, d.h. ob ein Herunterschalten aus einem höheren Gang oder eine Heraufschalten aus einem niedrigeren Gang auf das der Synchronisationseinheit zugeordnete Schaltrad erfolgt. Hierbei kann es von Vorteil sein, wenn beim Herunterschalten eine Servokraft erzeugt wird, deren Höhe sich von der beim Heraufschalten unterscheidet. Dies kann dadurch erzielt werden, dass die Innenseitenflächen der Öffnungen und entsprechend die jeweils zugeordneten umfänglichen Außenseiten der Vorsprünge unterschiedlich zur Servokraftrichtung angestellt sind. Damit kann in einer Drehrichtung eine Servokraft erzeugt werden, die sich in Anpassung an die durchzuführende Schaltung von der in Gegendrehrichtung erzeugten Servokraft g unterscheidet.

Die Selbstverstärkung kann zumindest zwei, vorzugsweise drei vorteilhaft umfänglich gleich beabstandete Übertragungseinheiten aufweisen. Beispielsweise kann das Bauteil bzw. das Bauelement der Bauelementgruppe zumindest zwei axiale Öffnungen mit umfänglichen Innenseiten als Rampen oder zumindest zwei axiale Vorsprünge mit umfänglichen Außenseitenflächen als Rampen aufweisen.

Eine bevorzugte Ausführungsform der Synchronisationseinrichtung kann axial zwischen dem Sperrsynchronring und dem Schaltrad ein Synchronring vorgesehen sein. Weiter kann zwischen den beiden Synchronringen ein als Zwischenkonus ausgebildetes Bauteil vorgesehen sein. Der Synchronring kann als Reibungsfläche, im Falle einer Doppelkonussynchronisierung, eine in Servokraftrichtung vordere dritte Reibkonusfläche und, im Falle einer Dreifachkonussynchronisierung, zusätzlich eine in Servokraftrichtung hintere dritte Reibkonusfläche aufweisen, mit der sich der Synchronring an dem Schaltrad abstützt. Der Synchronring kann im Falle der Doppelkonussynchronisierung stirnseitig am dem Schaltrad und im Falle der Dreifachkonussynchronisierung über seine hintere dritte Reibkonusfläche an der zweiten Reibkonusfläche des Schaltrades abstützen. Der Zwischenkonus kann seinerseits zwei vierte Reibkonusflächen, eine in Servokraftrichtung hintere vierte Reibkonusfläche und eine in Servokraftrichtung vordere vierte Reibkonusfläche, aufweisen. Der Zwischenkonus kann sich mit seiner vorderen vierten Reibkonusfläche in Servokraftrichtung vorn an der ersten Reibkonusfläche des Sperrsynchronrings und mit seiner hinteren vierten Reibkonusfläche in Servokraftrichtung hinten an der dritten vorderen Reibkonusfläche des Synchronrings abstützen.

Allgemein können zur Servokrafterzeugung bei der Doppelkonussynchronisierung wie bei der Dreifachkonussynchronisierung jeweils Bauteile miteinander gekoppelt werden, die bei den üblichen Doppelkonussynchronisierung bzw. Dreifachkonussynchronisierungen über Steckverbindungen bewegungsgekoppelt sind. Hierzu können die Steckverbindungen mit den Rampen versehen werden, an denen die Bauteile während der Synchronisation unter Erzeugung der Servokraft aneinander anliegen.

Beispielsweise kann sich der Synchronring über Rampen bzw. über eine Übertragungseinheit bzw. Übertragungseinheiten an dem Sperrsynchronring abstützen.

Damit kann der Sperrsynchronring bei der Synchronisierung mittels der Servokraft in Servokraftrichtung gegen den Synchronring gezogen werden. Damit können während des Synchronisationsvorganges über die Servokraft die beiden Synchronringe zueinander angezogen. Zusätzlich kann, in Vergrößerung der Reibung an dem zwischen ihnen gelagerten Zwischenkonus, eine verstärkte Abbremsung zum Gleichlauf hin bewirkt werden und somit den Synchronisationsvorgang abkürzt werden. Zur Erzeugung der axialen Servokraft kann sich der Zwischenkonus zusätzlich oder allein über Rampen bzw. über eine Übertragungseinheit oder mehrere Übertragungseinheiten an dem Schaltrad abstützen. Hierbei können sich zur Steckverbindung von Zwischenkonus und Schaltrad von dem Zwischenkonus axiale Vorsprünge jeweils in zugeordnete an dem Schaltrad vorgesehene axiale Öffnungen erstrecken. Da der Synchronring reibwirksam axial zwischen Zwischenkonus und Schaltrad angeordnet sein kann, kann der Zwischenkonus mittels seiner hinteren vierten Reibkonusfläche den Synchronring verstärkt gegen die zweite Reibkonusfläche des Schaltrades drücken und somit den Synchronisierungsvorgang beschleunigen

In Umkehrung der Anordnung von Öffnungen und Vorsprüngen können in allen Ausführungsformen der Synchronisationseinrichtung Öffnungen und Vorsprünge vertauscht an den zur Erzeugung der Servokraft zusammenwirkenden Bauteilen angeordnet sein. Die Vorsprünge können laschenartig als axiale und/oder radiale Fortsätze an dem betreffenden Bauteil oder Bauelement ausgebildet sein.

Üblicherweise kann zur Mitnahme des jeweiligen Bauteiles mit dem Synchronkörper bzw. mit dem Schaltrad vorgesehen sein, dass dieses mittels laschenartiger Vorsprünge oder Öffnungen mit jeweils einem geraden, d.h. sich nicht verjüngenden und/oder erweiternden Profil seitlich in am Synchronkörper bzw. am Schaltrad vorgesehene Öffnungen oder Vorsprünge eingreift. Beispielsweise können zur Drehverbindung über eine Steckverbindung aus Vorsprung und Öffnung, jeweils mit geradem Profil, bei üblichen Doppelkonussynchronisierungen bzw. Dreifachkonussynchronisierungen die beiden Synchronringe und der Zwischenkonus mit dem Schaltrad miteinander verbunden sein. Im Falle der Steckverbindung zwischen den Synchronringen können sich die in der Regel drei Vorsprünge, radial außen angeordnet, zumindest etwa radial nach innen in die vorgesehene Öffnung erstrecken und hierbei den Zwischenkonus übergreifen. Bei der erfindungsgemäßen Synchronvorrichtung kann vorgesehen sein, dass Vorsprung und Öffnung dieser Steckverbindung die beschriebenen Rampen aufweisen. Damit kann der konstruktive Aufwand für die Selbstverstärkung erheblich minimiert werden. Wie oben ausgeführt, können Vorsprung und/oder Öffnung bezüglich der umfänglich-axialen Ebene ein schwalbenschwanzartiges Profil mit Hintergriffigkeiten und/oder ein trapezartiges, wie ein gleichschenkliges trapezartiges Profil aufweisen.

In einer bevorzugten Ausbildung der Synchronisationseinrichtung kann die Bauelementgruppe als Bauelement ein Reibkonuselement mit der zweiten Reibkonusfläche aufweisen. Das Reibkonuselement kann als eigenständiges Bauelement ausgebildet sein. Das Reibkonuselement kann sich über Rampen an dem Schaltrad und über die zweite Reibkonusfläche am dem Sperrsynchronring abstützen. Die Bauelementgruppe kann ferner ein Verstärkungselement mit Reibflächen aufweisen, eine in Servokraftrichtung vordere Reibfläche, in der sich das Verstärkungselement gegen Servokraftrichtung an dem Reibkonuselement abstützt, und eine in Servokraftrichtung hintere Reibfläche, in der sich das Verstärkungselement in Servokraftrichtung an dem Schaltrad abstützt. Das Reibkonuselement kann das Verstärkungselement radial innen zum Verstärkungselement dasselbe axial übergreifen. Da sich das Reibkonuselement über die Rampen an dem Schaltrad abstützt, kann während der Synchronisation die Servokraft erzeugt werden, mittels derer das Reibkonuselement über die vordere Reibfläche das Verstärkungselement über dessen hintere Reibfläche gegen das Schaltrad drückt. An beiden Reibflächen kann hierüber eine verstärkte Abbremsung zum Gleichlauf hin erfolgen.

Das Verstärkungselement kann sich darüber hinaus über Rampen an dem Sperrsynchronring oder, bei Dreifachsynchronisierung, an dem Synchronring abstützen. Über die Rampen an Verstärkungselement und dem Sperrsynchronring bzw. dem Synchronring kann eine zusätzliche Servokraft erzeugt werden. Diese kann über die erste Reibkonusfläche des Sperrsynchronrings bzw. über die hintere Reibkonusfläche des Synchronringes Reibung verstärkend auf die zweite Reibkonusfläche des Reibkonusflächeelementes einwirken. Damit kann ein weiteres positives oder negatives Beschleunigungsmoment auf das Reibkonuselement zum Gleichlauf hin ausübt werden.

Das Reibkonuselement kann hier eigenständiges Bauteil mit der zweiten Reibkonusfläche konzipiert sein, das gegenüber den zuvor beschriebenen üblichen Ausführungsformen der Synchronisationseinrichtung nicht einstückig mit dem Schaltrad verbunden ist, sondern von demselben konstruktiv "getrennt" und über Steckverbindungen mit dem Schaltrad verbunden ist. Damit sind aber dennoch sämtliche zuvor beschriebene Bauweisen der Synchronisationseinrichtung weiterhin konstruktiv möglich : Der Sperrsynchronring kann bei der Einfachkonussynchronisierung mit dem Schaltrad gekoppelt sein. Bei der Doppel- und Dreifachkonussynchronisierung kann der Zwischenkonus mit dem Schaltrad und/oder der Sperrsynchronring mit dem Synchronring gekoppelt sein. Bei jeder dieser Koppelungen kann eine Selbstverstärkung zusätzlich zu der des Reibkonuselementes erzeugt werden.

Vorzugsweise ist das Verstärkungselement in einfacher Bauweise ringscheibenartig, insbesondere kreisringscheibenartig ausgebildet. Seine Reibflächen sind vorzugsweise senkrecht zur Welle bzw. zur Servokraftrichtung angeordnet. Es kann hierbei einen radial äußeren Ringbereich mit den Reibflächen und einen radial inneren Ringbereich mit den Vorsprüngen aufweisen. Diese Vorsprünge können sich, auf einem Umfangskreis vorzugsweise umfänglich gleich beabstandet angeordnet, gegen Servokraftrichtung in die an dem Sperrsynchronring vorgesehenen axialen Öffnungen hinein erstrecken. Insofern kann das Verstärkungselement einen Kranz aus diesen Vorsprüngen aufweisen. In Umkehrung der Anordnung können die Öffnungen an dem Verstärkungselement und die zugehörigen Vorsprünge an dem ersten Synchronelement angeordnet sein.

Die vorliegende Erfindung wird im Folgenden anhand mehrerer in einer Zeichnung dargestellten Ausführungsformen der Synchronisationseinrichtung näher erläutert. In der Zeichnung zeigen:
Fig. 1 eine Längsschnittansicht zweier symmetrisch auf einer Welle angeordneten Synchronisationseinrichtungen als Stand der Technik, hier als Dreifachkonussynchronisierung mit Zwischenkonus,
Fig. 2 eine Längsschnittansicht des Zwischenkonus gemäß Figur 1,
Fig. 3 eine Längsschnittansicht einer ersten Ausführungsform zweier erfindungsgemäßen symmetrisch auf einer Welle angeordneten Synchronisationseinrichtungen, als Dreifachkonussynchronisierung mit Zwischenkonus und Gangrad,
Fig. 4a einen Längsschnittsbereich mit dem Zwischenkonus und Gangrad gemäß Figur 3, mit einer nicht erfindungsgemässen Ausführungsform der Rampen.
Fig. 4b einen Längsschnittsbereich wie in Figur 4a, jedoch mit einer erfindungsgemässen Ausführungsform von Zwischenkonus und Gangrad,
Fig. 5 eine schematische Darstellung von Kräften an einzelnen Bauteilen der ersten Ausführungsform der Synchronisationseinrichtung gemäß Figur. 3,
Fig. 5a eine Einzelausschnittsdarstellung von Gangrad und Zwischenkonus gemäß Figur 4b,
Fig. 6 eine Längsschnittansicht einer zweiten Ausführungsform zweier erfindungsgemäßen auf der Welle angeordneten Synchronisationseinrichtungen, hier als Dreifachkonussynchronisierung mit einem äußeren Sperrsynchronring und einem inneren Synchronring,
Fig. 7a und 7b jeweils einen Längsschnittsbereich mit den beiden Synchronringen, die unterschiedlich verbunden sind (mit einer nicht erfindungsgemässen Ausführungsform der Rampen),
Fig. 8 eine schematische Darstellung von Kräften an einzelnen Bauteilen der zweiten Ausführungsform hier der in Figur 6 rechten Synchronisationseinrichtung als Doppelkonussynchronisierung,
Fig. 8a eine zusätzliche schematische Darstellung ineinander greifender Konusringe,
Fig. 9 eine Längsschnittansicht einer dritten Ausführungsform zweier erfindungsgemäßen symmetrisch auf einer Welle angeordneten Synchronisationseinrichtung, hier als Einfachkonussynchronisierung mit erstem Synchronring, Gangrad und Konuselement,
Fig. 10 einen schematischen Längsschnittausschnitt X gemäß Figur 9,
Fig. 11 einen Längsschnittausschnitt XI gemäß Figur 10, mit einer nicht erfindungsgemässen Ausführungsform der Rampen,
Fig. 12a einen Längsschnittausschnitt XII gemäß Figur 10 mit einer nicht erfindungsgemässen Ausführungsform der Rampen, und
Fig. 12b einen Längsschnittausschnitt XII wie in Figur 12a, jedoch mit erfindungsgemässen Rampen.

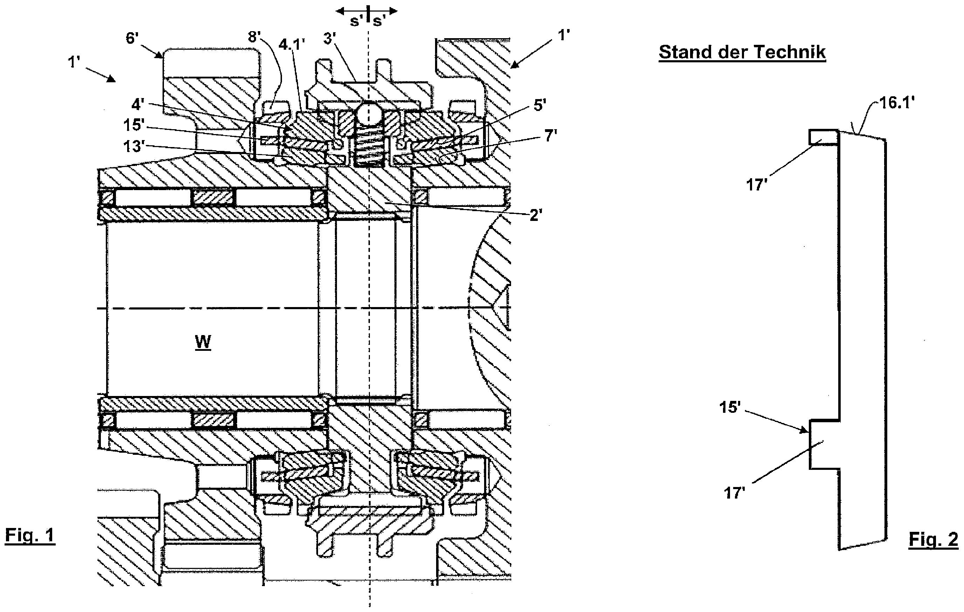

In den Figuren 1 bis 12 werden in verschiedenen Längsschnittansichten und Teilansichten verschiedene Ausführungsformen einer Synchronisationseinrichtung 1,1' gezeigt, wobei in den Figuren 1 und 2 eine übliche Synchronisationseinrichtung 1' und in den übrigen Figuren unterschiedliche Ausführungsformen der erfindungsgemäßen Synchronisationseinrichtung 1 wiedergegeben sind. (Im Folgenden sind die Bezugszeichen, die sich auf ein Bauteil der Synchronisationseinrichtung 1' gemäß dem Stand der Technik beziehen, mit einem hochgestellten Strich gekennzeichnet). In allen Figuren sind jeweils zwei Synchronisationseinrichtungen 1, 1' gezeigt, die spiegelsymmetrisch zueinander auf einer Welle W angeordnet sind.

Die Synchronisationseinrichtung 1,1' weist, konzentrisch zu der Welle W angeordnet, einen Synchronkörper 2, 2', eine Schaltmuffe 3, 3', einen Sperrsynchronring 4, 4' mit einer ersten Reibkonusfläche 5, 5' als Reibungsfläche und einer Sperrverzahnung 4.1, 4.1' sowie ein Schaltrad 6, 6' mit einer zweiten Reibkonusfläche 7, 7' als Reibungsfläche und einer Kupplungsverzahnung 8, 8' auf. Die dargestellten Synchronisationseinrichtungen 1, 1' sind, in üblicher Bauweise, so ausgebildet, dass die Schaltmuffe 3, 3' axial zu beiden Richtungen hin jeweils zu einem Schaltrad 4; 4' verschiebbar ist.

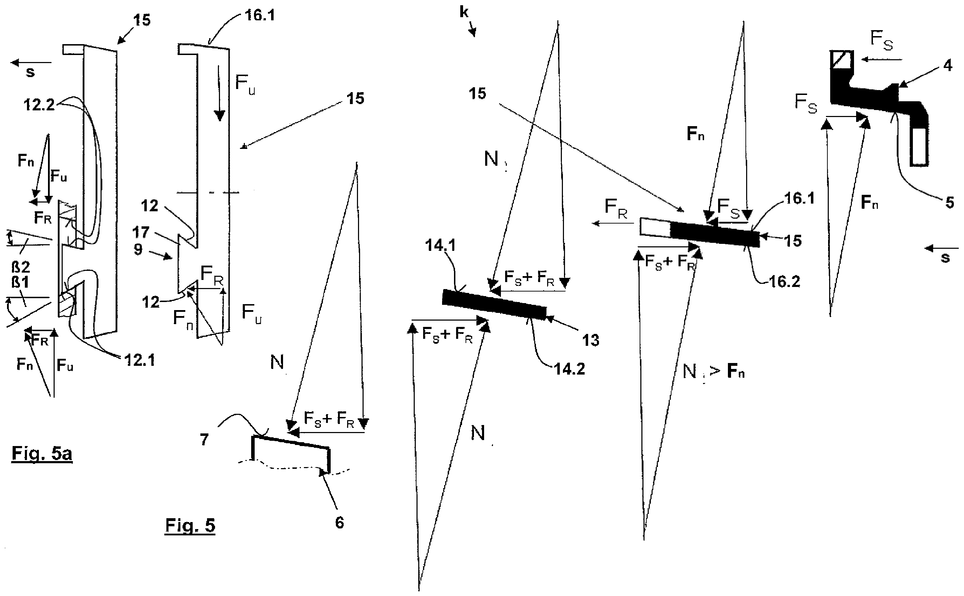

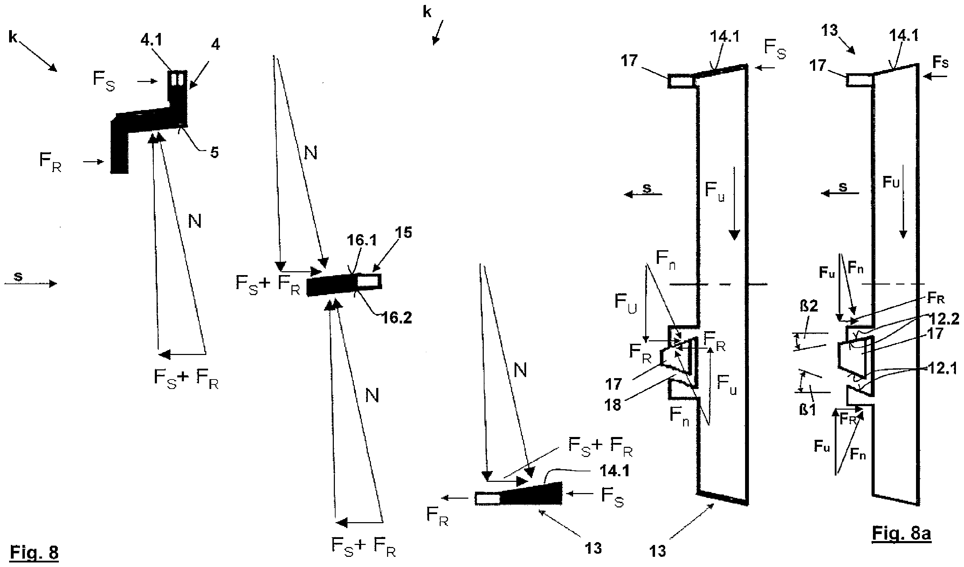

Ferner weist die erfindungsgemäße Synchronisationseinrichtung 1 eine Selbstverstärkung 9 zur Erzeugung einer zur Welle W axialen Servokraft F_{R} mit einer Servokraft Richtung s von dem Synchronkörper 2 zu dem Schaltrad 6 hin auf. Die Selbstverstärkung 9 ist in einem Kraftflussbereich k der Synchronisationseinrichtung 1 zwischen dem Sperrsynchronring 4 und dem Schaltrad 6 angeordnet. Damit ist der Kraftflussbereich k von dem Sperrsynchronring 4 bis auf das Schaltrad 6 gemeint. Der Kraftfluss in dem Kraftflussbereich k ist mit wirkenden Kräfteverhältnissen Beispiel gebend für die erste und zweite Ausführungsform der erfindungsgemäßen Synchroneinrichtung 1 in den Figur 5 bzw. 8, wobei die die Servokraft erzeugenden Bauteile 10 zur Darstellung der auf diese Bauteile 10 wirkenden Kräfte getrennt voneinander dargestellt sind.

Wie oben ausgeführt, wird die Schaltmuffe 3 beim Schaltvorgang zur drehfesten Verbindung von Synchronkörper 2 und Schaltrad 6 unter Verzahnungseingriff über die Kupplungsverzahnung 8 des Schaltrades 6 in Servokraftrichtung s geführt. Zur Ausrichtung der Verzahnungen 8 ist ein Gleichlauf von Schaltrad 6 und Synchronkörper 2 erforderlich. Der Synchronkörper 2 ist drehfest und das Schaltrad 6 ist als Losrad auf der Welle W angeordnet. Eine Abbremsung oder Beschleunigung des Schaltrades 6 auf der Welle W durch den Synchronkörper 2 erfolgt durch Kraftübertragung an den Reibkonusflächen 5, 7. Zur Beschleunigung des Synchronisationsvorganges wird mittels der Selbstverstärkung 8 die axiale Servokraft F_{R} erzeugt, die zusätzlich zu einer über die Schaltmuffe 3 von außen her eingebrachte axiale Schaltkraft F_{S} in Servokraftrichtung s auf die Synchronisationseinrichtung 1 wirkt. Infolge einer hierdurch erhöhten Reibung an den Reibkonen 5, 7 wird eine Verkürzung des Synchronisationsvorganges beim Schalten ermöglicht und/oder eine geringere vom Benutzer aufzubringende Schaltkraft Fₛ benötigt.

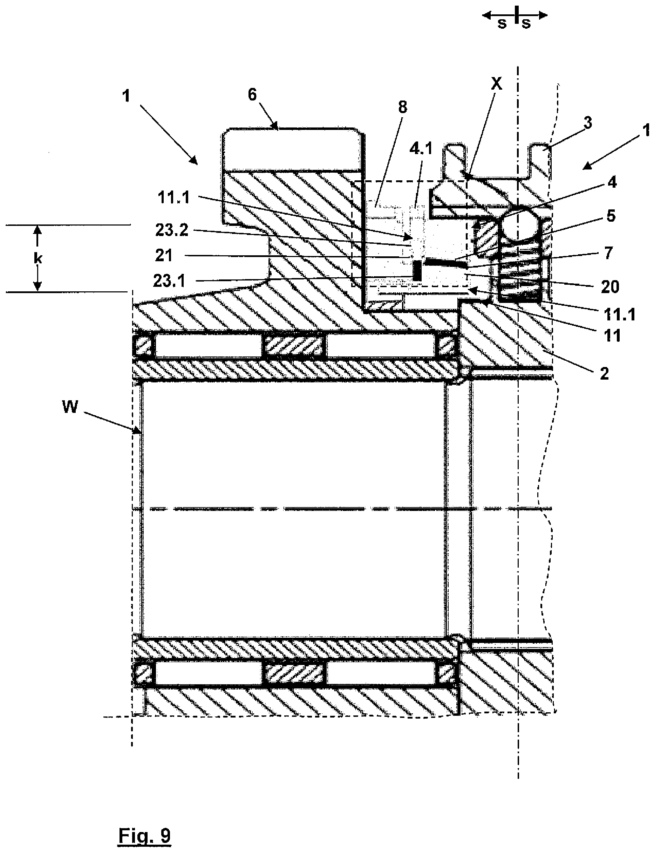

In dem Kraftflussbereich k ist, abhängig von der hier jeweils gezeigten Ausführungsform der Synchronisationseinrichtung 1, zumindest ein zur Welle W konzentrisches Bauteil 10 oder eine zur Welle W konzentrische Bauelementgruppe 11 mit hier gemäß Figur 9 zwei Bauelementen 11.1 angeordnet. Es sind bestimmte Bauteile 10 oder Bauelemente 11.1 mit dem Schaltrad 6 bzw. dem Sperrsynchronring 4 über Rampen 12 im Synchronisationsvorgang kraftwirksam gekoppelt. Mit dem Anliegen an den Rampen ruft bei Nichtgleichlauf auf das Bauteil 10 bzw. Bauelement 11 wirkende Umfangskraft F_{U} eine Servokraft F_{R} hervor. Um die Servokraft F_{R} in Servokraftrichtung s erzeugen zu können, muss die Rampe 12 des in Servokraftrichtung s hinteren Bauteiles zweier über Rampen 12 zweier gekoppelter Bauteile 10 mit einer axialen Richtungskomponente fₐ gegen Servokraftrichtung s weisen.

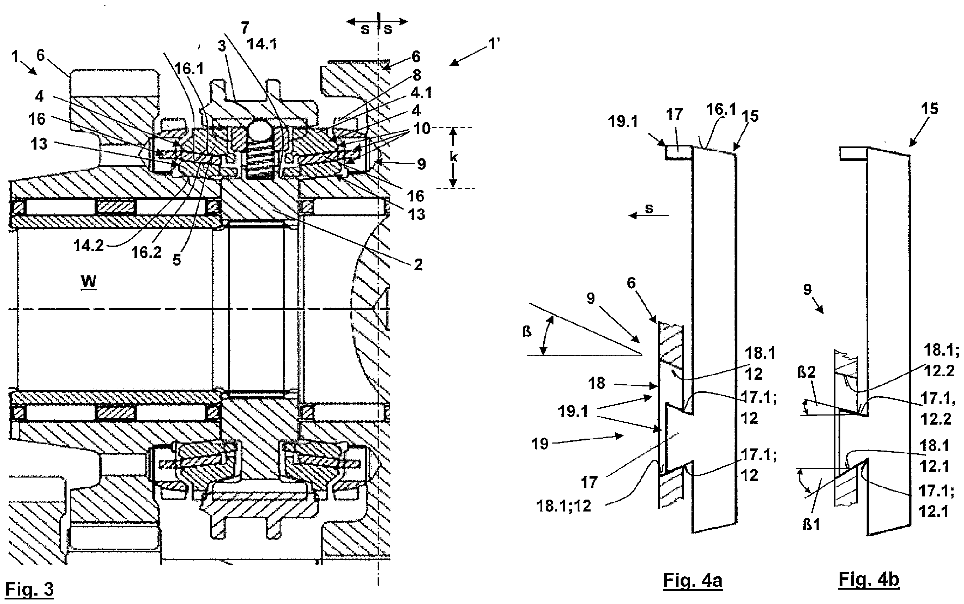

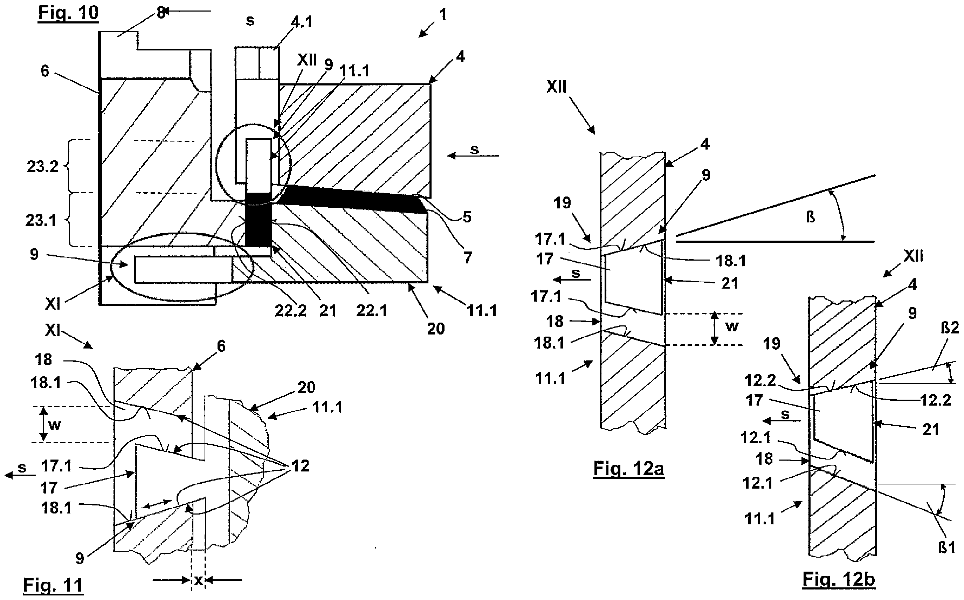

Wie links in Fig. 5 exemplarisch wiedergegeben, wirkt auf die Rampen 12 jeweils eine Normalkraft Fₙ mit einer zur Welle W axialen Richtungskomponente Fₐ und einer zur Welle W umfänglichen Richtungskomponente Fᵤ Die Rampen 12 sind somit jeweils in einem exemplarisch in Figuren 4 und 12 angegebenen Winkel β zur Servokraftrichtung s angeordnet. Es kann über die Größe des Winkels β die anteilige Höhe der Servokraft F_{R} eingestellt werden.

Die Figuren 3 bis 5 beziehen sich auf eine erste Ausführungsform der erfindungsgemäßen Synchronisationseinrichtung 1. Diese ist als sogenannte Dreifachkonussynchronisierung ausgebildet. Sie weist in dem Kraftflussbereich k als zusätzliche Bauteile 10 einen Synchronring 13 mit einer vorderen dritten Reibkonusfläche 14.1 und einer hinteren dritten Reibkonusfläche 14.1 jeweils als Reibungsfläche und ein als Zwischenkonus 15 ausgebildetes Bauteil 10 mit einer vorderen dritten Reibkonusfläche 16.1 und einer hinterem dritten Reibkonusfläche 16.1 jeweils als Reibungsfläche auf. Der Zwischenkonus 15 ist axial zwischen den beiden Synchronringen 4, 13 angeordnet und stützt sich mit seiner vorderen vierten Reibkonusfläche 16.1 in Servokraftrichtung s vorn an der ersten Reibkonusfläche 5 des Sperrsynchronringes 4 und sich mit seiner hinteren vierten Reibkonusfläche 16.2 in Servokraftrichtung s hinten an der vorderen dritten Reibkonusfläche 14.1 des Synchronringes 13 ab. Ferner erstreckt er sich unter Ausbildung einer Steckverbindung mittels hier drei umfänglich gleich beabstandeter Iaschenartiger Vorsprünge 17 jeweils in einer an dem Schaltrad 6 vorgesehener ihm zugeordneter Öffnung 18 hinein und stützt sich dort über am Schaltrad 6 vorgesehene Rampen 12 an demselben ab (Fig. 4a, 4b). Somit bilden Vorsprung 17 und zugeordnete Öffnung 18 eine Übertragungseinheit 19 mit Vorsprung 17 und Öffnung 18 als Übertragungselemente 19.1. Die Vorsprünge 17 weisen jeweils bezüglich einer umfänglich-axialen Ebene eine schwalbenschwanzähnliche Form auf (Figur 4a, 4b).

Auch die in Figur 1 und 2 dargestellte Synchronisationseinrichtung 1' gemäß dem Stand der Technik ist als Dreifachkonussynchronisierung mit einem Zwischenkonus 15' mit einer vorderen Reibkonusfläche 16.1' ausgebildet. Mittels an dem Zwischenkonus 15' angeordneter Vorsprünge 17' und an dem Schaltrad 6' angeordneter Öffnungen 18' wird eine axiale Steckverbindung ausgebildet. Es sind jedoch keine Selbstverstärkung, insbesondere keine Rampen zu Erzeugung der Servokraft vorgesehen. Die Vorsprünge 17' weisen bezüglich einer axialen- umfänglichen Ebene ein rechtwinkliges Profil auf. Ein Vergleich mit der in den Figuren 3 bis 5 dargestellten Ausführungsform der erfindungsgemäßen Synchronisationseinrichtung 1 zeigt, dass mit Austausch des Zwischenkonus und des Schaltrades eine Synchronisationseinrichtung 1' gemäß dem Stand der Technik zu der erfindungsgemäßen Synchronisationseinrichtung 1 unaufwendig umgerüstet werden kann.

In Figur 5 sind die Kräfteverhältnisse an den einzelnen Bauteilen 10 in dem Kraftflussbereich k schematisch dargestellt. Rechts in Figur 5 ist der Sperrsynchronring 4 gezeigt, der mit seiner ersten Reibkonusfläche 5 auf die vierte Reibkonusfläche 16 des Zwischenkonus 15 wirkt. Dieser wirkt auf die hier links davon dargestellten vordere dritte Reibkonusfläche 14.1 des Synchronringes 13 und diese wiederum wirkt auf die zweite Reibkonusfläche 7 des Schaltrades 6. Die Bereiche, an denen eine Reibungsarbeit erfolgt, sind zum leichteren Verständnis hier, wie auch in den übrigen Figuren, schwarz dargestellt. Zusätzlich ist in Figur 5 links der Zwischenkonus 15 in einer Einzeldarstellung mit den Vorsprüngen 17 herausgezeichnet, um die Entstehung der Servokraft F_{R} herauszustellen.

Im Einzelnen, in einer Abfolge von rechts nach links, erfolgt eine Einleitung einer Schaltkraft F_{S} mittels einer in Figur 5 nicht dargestellten Schaltmuffe auf den Sperrsynchronring 4. Auf die erste Reibkonusfläche 5 des Sperrsynchronringes 4 wirkt somit eine Normalkraft F_{N}, die sich aus der Schaltkraft F_{S} und einer Radialkraft F_{R} zusammensetzt. Diese Normalkraft F_{N} wird auf den Zwischenkonus 15 übertragen. Da sich der Vorsprung 17 über seine Rampe 12 an der hier nicht explizit dargestellten Rampe der Öffnung 18 in Umfangsrichtung an dem Schaltrad 6 abstützt, wird die zusätzliche axiale Servokraft F_{R} erzeugt, die wiederum die Normalkraft F_{N} auf die Normalkraft N an dem Zwischenkonus 15 erhöht und auf die vordere dritte Reibkonusfläche 14 des Synchronringes 13 und von dem Synchronring 13 auf die zweite Reibkonusfläche 7 des Schaltrades 6 übertragen wird. Damit wirkt die Servokraft F_{S} über die erhöhte Normalkraft N auf die Reibkonusflächen 16.2, 14.1 bzw. 14.2, 7. Da der Zwischenkonus 15 mit dem Schaltrad 6 und die beiden Synchronringe 4, 13 zueinander drehwirksam gekoppelt sind, entstehen an den Reibkonen 16.2, 14.1 bzw. 14.2, 7 bei Nichtgleichlauf eine verstärkte Reibung, die den Synchronisationsvorgang zum Gleichlauf hin beschleunigt.

Die in Figur 4b dargestellte Ausführungsform der Synchronisationseinrichtung 1 weist abweichend von der in Figur 4a und 5a dargestellte Ausführungsform der Synchronisationseinrichtung 1 unterschiedliche Rampen, erste Rampen 12.1 und zweite Rampen 12.1 auf, die axial in einem ersten Winkel ß1 bzw. in einem zweiten Winkel ß2 angestellt sind, wobei der erste Winkel ß1 größer als der zweite Winkel ß2 ist. Damit ist die über die ersten Rampen 12.1 übertragene axiale Servokraft F_{R} größer als die über die zweiten Rampen 12.2 übertragene axiale Servokraft F_{R}. Hierbei sind die ersten Rampen 12.1 zur Kraftübertragung bei Nichtgleichlauf der Synchronringe 4, 13 von einem höheren in einen dem Schaltrad 4 zugeordneten Gang und die zweiten Rampen 12.2 zur Kraftübertragung bei Nichtgleichlauf der Synchronringe 4, 13 von einem niedrigeren Gang in den diesem Schaltrad 4 zugeordneten Gang hinein ausgelegt.

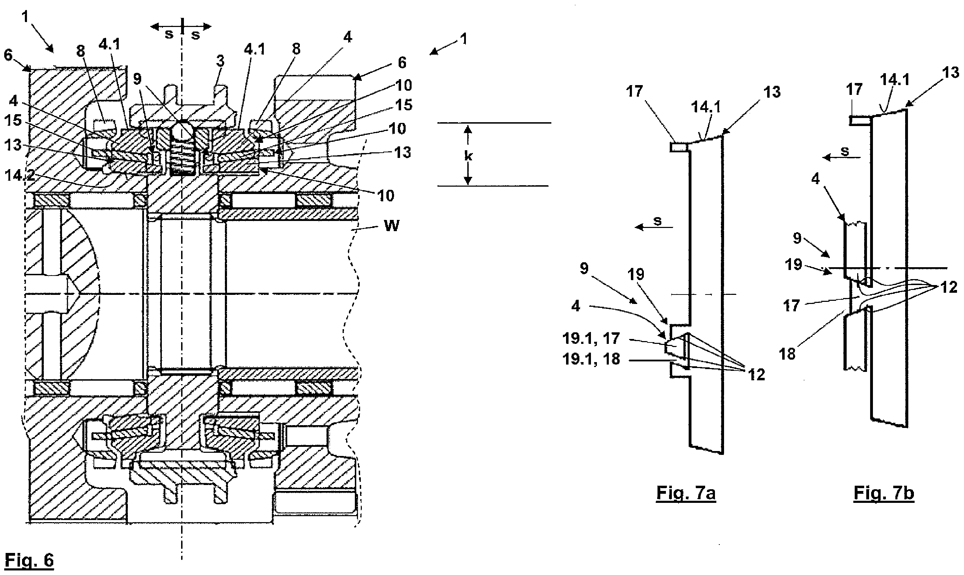

In den Figuren 6 bis 8 werden verschiedene Darstellungen einer weiteren Ausführungsform der Synchronisationseinrichtung 1 mit zwei spiegelbildlich zueinander angeordneten Synchronisationseinrichtungen 1 gezeigt, wobei die hier linke Synchronisationseinrichtung 1 als Dreifachkonussynchronisierung und die hier rechte Synchronisationseinrichtung 1 als Doppelsynchronisierung ausgebildet ist. In der Dreifachsynchronisierung weist der Synchronring 13 im Gegensatz zu dem der Doppelsynchronisierung eine hintere dritte Reibkonusfläche 14.2, in der sich der Synchronring 13 über die zweite Reibkonusfläche 7 des Schaltrades 6 abstützt. Bei der Doppelsynchronisierung stützt sich der Synchronring 13 stirnseitig an dem Schaltrad 6 ab, wodurch hier eine wesentlich geringe Reibung im Vergleich zur der Dreifachsynchronisierung möglich ist. Dieser konstruktive Unterschied ist jedoch für die Erzeugung der Servokraft F_{R} unerheblich, da hier vorgesehen ist, dass die beiden Synchronringe 4, 13 über vorgesehene Rampen 12 miteinander gekoppelt sind, so dass im Zusammenwirken der beiden Synchronringe 4, 13 über die hier drei Übertragungseinheiten 19 die Servokraft F_{R} in Servokraftrichtung s erzeugt wird.

Beispielgebend sind in den Figuren 7a und 7b zwei unterschiedliche Paarungen von Vorsprung 17 und Öffnung 18 gezeigt, wobei die Vorsprünge 17 in Figur 7a Teil des Sperrsynchronringes 4 und in Figur 7 Teil des Synchronringes 13 sind.

In Figur 8 werden die Kräfteverhältnisse über die Rampen 12 miteinander gekoppelten Synchronringe 4, 13 und den dazwischen liegenden Zwischenkonus 15 dargestellt, wobei hier, im Gegensatz zu Figur 5, der Sperrsynchronring 4 links und der Synchronring 13 rechts dargestellt sind. Rechts ist der Synchronring 13 mit einem in die Öffnung 18 des Synchronringes 13 eingreifenden Vorsprung 17 des Sperrsynchronringes 4 gesondert gezeigt. Infolge der dort entstehenden Servokraft F_{R} werden die beiden Synchronringe 4, 13 stärker gegeneinander gedrückt, wodurch sich deren Reibung an den vierten Reibkonusflächen 16.1, 16.2 des Zwischenkonus 15 erhöht wird. Da die Servokraft F_{R} bereits am Sperrsynchronring 4 erzeugt wird, wirkt bereits hier die erhöhte Normalkraft N auf die Rampen 12.

Bei einer möglichen, aber hier nicht dargestellten Kombination der beiden Ausführungsformen der erfindungsgemäßen Synchronisationseinrichtung 1 gemäß den Figuren 3 bis 8 können sich der Zwischenkonus über die Rampen an dem Schaltrad und zusätzlich die beiden Synchronringe ebenfalls über Rampen aneinander abstützen.

In Figur 8a ist eine weitere Ausführungsform der Synchronisationseinrichtung 1 gezeigt, die gleich der in Figuren 4b und 5a dargestellten Ausführungsformen der der Synchronisationseinrichtung 1 unterschiedliche erste Rampen 12.1 und zweite Rampen 12.1 aufweist, die axial in dem ersten Winkel ß1 bzw. dem zweiten Winkel ß2 zur Welle W angestellt sind.

In den Figuren 9 bis 12 wird eine weitere Ausführungsform der Synchronisationseinrichtung 1 gezeigt, die hier als Einfachkonussynchronisierung ausgebildet ist. Dies heißt, dass lediglich ein Sperrsynchronring 4 mit Sperrverzahnung 4.1 vorgesehen ist, der sich über seine erste Reibkonusfläche 5 an der zweiten Reibkonusfläche 7 abstützt.

Zur Erzeugung der Servokraft F_{R} sind hier in dem Kraftflussbereich k zwei weitere Bauelemente 11.1 der Bauelementgruppe 11 vorgesehen. Der zweite Reibkonusfläche 7 ist in einem eigenständigen Reibkonusflächeelement 20 angeordnet, das sich in Erzeugung der Servokraft F_{R} im Falle der Synchronisierung über Rampen 12 an dem Schaltrad 6 abstützt. Zudem ist als weiteres Bauelement 11.1 der Bauelementgruppe 11 ein hier scheibenartiges Verstärkungselement 21 mit in axialer Richtung weisenden Reibflächen, einer in Servokraftrichtung s vorderen Reibfläche 22.1 und einer in Servokraftrichtung s hinteren Reibfläche 22.2, vorgesehen.

Wie insbesondere in Figur 10, eine Ausschnittsvergrößerung X aus Figur 9, deutlich ersichtlich, umgreift das Reibkonuselement 20 das Verstärkungselement 21 radial innen hakenartig und liegt an der vorderen Reibfläche 22.1 des Verstärkungselementes 21 an. Das Verstärkungselement 21 liegt mit seiner hinteren Reibfläche 22.1 an dem Schaltrad 6 an. Somit tritt während der Synchronisation an den Reibflächen 22.1, 22.2 eine zusätzliche Reibung auf, die den Synchronisationsvorgang an sich beschleunigt. Die Reibflächen 22.1, 22.2 sind in einem radial innen liegenden Ringbereich 23.1 angeordnet, der in Figur 10 mittels einer Schwarzfärbung hervorgehoben ist. Das Verstärkungselement 21 weist einen äußeren Ringbereich 23.2 auf, in dem es sich über in Figur 12a dargestellten Rampen 12 an dem Sperrsynchronring 4 abstützt. Das Verstärkungselement 21 weist mehrere umfänglich gleich beabstandete und sich gegen Servokraftrichtung s erstreckende Vorsprünge 17 auf, die jeweils in eine vorgesehene Öffnung 18 eingreifen und, abhängig von der Richtung einer Drehzahldifferenz zwischen Schaltrad 6 und Synchronkörper 2, mit einer umfänglichen Außenseitenflächen 17.1 als Rampe 12 an einer umfänglichen Innenseitenfläche 18.1 als Rampe 12 Servokraft F_{R} erzeugend angreifen.

Ebenfalls weist das Reibkonuselement 20, wie in Figur 11, eine Ausschnittsvergrößerung XI aus Figur 10, dargestellt, einen Kranz von umfänglich gleich beabstandeten Vorsprüngen 17 mit Rampen 12 auf, wobei die Vorsprünge 17 in vorgesehenen Öffnungen 18 mit Innenseitenflächen 18.1 als Rampen 12 an dem Schaltrad 6 angreifen und während der Synchronisation an den Rampen 12 anliegen. Da das Verstärkungselement 21 mit dem Sperrsynchronring 4 und das Reibkonuselement 20 mit dem Schaltrad 6 gekoppelt sind, liegen die Vorsprünge 17 des Reibkonuselementes 20 während des Synchronisationsvorganges bei Nichtgleichlauf von Schaltrad 6 und erstem Synchronring 4 jeweils mit einer Außenseitenfläche 17.1 an einer Innenseitenfläche 18.1 der zugehörigen Öffnung 18 an dem Schaltrad 6 an. Die Innenseitenflächen 18.1 der Öffnungen 18 am Sperrsynchronring 4 und Verstärkungselement 21 weisen in Servokraftrichtung s.

Wie in den Figuren 11, 12a und 12b angedeutet, weist die Öffnung 18 eine umfängliche Montagetoleranz w auf, d.h. die Öffnung 18 ist gegenüber der umfänglichen Erstreckung des zugehörigen Vorsprunges 17 um die Montagetoleranz erweitert, um eine problemlose Montage, d.h. ein Ineinanderstecken von Vorsprung 17 und Öffnung 18 zu ermöglichen.

Da eine Servokraft F_{R} an zwei unterschiedlichen Bereichen erzeugt wird, kann somit eine insgesamt erhöhte Servokraft F_{R} erzielt werden. Mittels des Verstärkungselementes 21 mit seinen beiden Reibflächen 22.1, 22.2 wird bei Nichtgleichlauf zusätzlich zu den Reibkonen 5, 7 von erstem Synchronring 4 und Schaltrad 6 eine zusätzliche Reibung erzeugt, die den Synchronisationsvorgang gegenüber üblichen Einfachkonussynchronisierungen erheblich abkürzt. Ferner wird durch die auf das Reibkonuselement 20 wirkende Servokraft F_{R} die Reibung an dem Verstärkungselement 21 und durch die auf den Sperrsynchronring 4 wirkende Servokraft F_{R} die Reibung an den Reibkonen 5, 7 vergrößert. Beides führt dazu, dass der Synchronisationsvorgang erheblich beschleunigt wird.

Wie Beispiel gebend in Figur 11 eingezeichnet, ist zwischen den gekoppelten Bauteilen 10 bzw. Bauelementen 11.1, d.h. hier zwischen dem Schaltrad 6 mit der Öffnung 18 und dem Reibkonuselement 20 dem Vorsprung 17, ein Abstand x vorgesehen, damit hier Schaltrad 6 und Reibkonuselement 20 nicht stirnseitig an relativ geringen Flächen anstatt über die vorgesehenen hierzu größeren Reibkonusflächen aneinander reiben, welches zudem die mögliche Servokraft vermindern würde. Unmittelbar einsichtig aus der Zeichnung ist jedoch, dass dieser Abstand x auch einen anderen Wert größer Null aufweisen kann. Dies wiederum bedeutet, dass über einen etwas geringeren oder größeren Abstand als dargestellt Axialtoleranzen zwischen den gekoppelten Bauteilen bzw. bezüglich der Synchronisationseinrichtung unaufwendig ausgeglichen werden können.

In Figur 12b sind, abweichend zu Figur 12a, asymmetrische Rampen 12.1, 12.2 dargestellt, die, wie ebenfalls in den Figuren 4a, 5a und 8a gezeigt, zur Übertragung unterschiedlicher axialer Servokräfte F_{R} axial in unterschiedlichen Winkeln ß1, ß2 zur Welle W geneigt sind.

In den Figuren 4b, 5a, 8a und 12b sind die asymmetrischen Rampen 12.1, 12.2 so ausgelegt, dass der erste Winkel ß1 der ersten Rampen 12.1 größer als der zweite Winkel ß2 der zweiten Rampen ist. Es versteht sich, dass, wie weiter oben beschrieben, insbesondere bei Synchronisationseinrichtungen für höhere Gänge, der erste Winkel kleiner als der zweite Winkel sein kann.

### BEZUGSZEICHENLISTE

- 1,1': Synchronisationseinrichtung
- 2, 2': Synchronkörper
- 3, 3': Schaltmuffe
- 4,4': Sperrsynchronring
- 4.1,4.1': Sperrverzahnung
- 5, 5': erste Reibkonusfläche
- 6, 6': Schaltrad
- 7, 7': zweite Reibkonusfläche
- 8, 8': Kupplungsverzahnung
- 9: Selbstverstärkung
- 10: Bauteil
- 11: Bauelementgruppe
- 11.1: Bauelement
- 12: Rampe
- 12.1: erste Rampe
- 12.2: zweite Rampe
- 13: Synchronring
- 14.1: vordere dritte Reibkonusfläche
- 14.2: hintere dritte Reibkonusfläche
- 15, 15': Zwischenkonus
- 16.1, 16.1': vordere vierte Reibkonusfläche
- 16.2: hintere vierte Reibkonusfläche
- 17, 17': Vorsprung
- 17.1: Außenseitenfläche
- 18: Öffnung
- 18.1: Innenseitenfläche
- 19: Übertragungseinheit
- 19.1: Übertragungselement
- 20: Reibkonuselement
- 21: Verstärkungselement
- 22.1: vordere Reibfläche
- 22.2: hintere Reibfläche
- 23.1: innerer Ringbereich
- 23.2: äußerer Ringbereich
- F_{N}, Fₙ, N: Normalkraft
- F_{R}: Servokraft
- F_{S}: Schaltkraft
- Fu: Umfangskraft
- W: Welle
- ß: Winkel
- ß1: erster Winkel
- ß2: zweiter Winkel
- f: Flächennormale
- fₐ: axiale Richtungskomponente
- fᵤ: umfängliche Richtungskomponente
- s: Servokraftrichtung
- k: Kraftflussbereich
- w: Montagetoleranz
- x: Abstand

## Patentansprüche

1. Synchronisationseinrichtung (1) für ein Getriebe, mit einer Schaltmuffe (3), einem Sperrsynchronring (4) und einem Schaltrad (6), wobei in einem Kraftflussbereich (k) zwischen Sperrsynchronring (4) und Schaltrad (6) an mindestens einem Bauteil (10) Rampen (12) zur Erzeugung einer zur Welle (W) axialen Servokraft (Fₛ) in einer Servokraftrichtung von dem Sperrsynchronring (4) zu dem Schaltrad (6) hin vorgesehen sind, wobei erste Rampen (12.1) zur Servokrafterzeugung beim Herunterschalten aus einem höheren Gang in einem ersten Winkel (ß₁) zur Welle (W) und zweite Rampen (12.2) zur Servokrafterzeugung beim Heraufschalten aus einem niedrigeren Gang in einem zweiten Winkel (ß₂) zur Welle (W) angeordnet sind, **dadurch gekennzeichnet**, das der erste Winkel (ß₁) ungleich dem zweiten Winkel (ß₂) ist und die ersten Rampen asymmetrisch zu den zweiten Rampen ausgebildet sind.

2. Synchronisationseinrichtung (1) nach Anspruch 1, **dadurch gekennzeichnet, dass** der erste Winkel (ß₁) dann, wenn das Schaltrad (6) in dem Getriebe für einen ersten Gang vorgesehen ist, größer als der zweite Winkel (ß₂) ist.

3. Synchronisationseinrichtung (1) nach Anspruch 2, **dadurch gekennzeichnet, dass** der erste Winkel (ß₁) mindestens doppelt so groß wie der zweite Winkel (ß₂) ist.

4. Synchronisationseinrichtung (1) nach einem der Ansprüche 1 bis 3, **dadurch gekennzeichnet, dass** der erste Winkel (ß₁) dann, wenn das Schaltrad (6) in einem Getriebe für einen Gang größer der erste Gang vorgesehen ist, kleinerer als der zweite Winkel (ß₂) ist.

5. Synchronisationseinrichtung (1) nach Anspruch 4, **dadurch gekennzeichnet, dass** der erste Winkel (ß₁) um mindestens 5° kleiner als der zweite Winkel (ß₂) ist.

6. Synchronisationseinrichtung (1) nach einem der Ansprüche 1 bis 5, **dadurch gekennzeichnet, dass** zwischen dem Sperrsynchronring (4) und dem Schaltrad (6) zumindest ein Bauteil (10) und/oder eine Bauelementgruppe (11) mit mindestens einem Bauelement (11.1) angeordnet ist, wobei sich das Bauteil (10) und/oder das Bauelement (11.1) der Bauelementgruppe (11) zur Umwandlung einer auf dieses Bauteil (10) und/oder Bauelement (11.1) wirkenden Umfangskraft (F_{U}) in die Servokraft (F_{S}) mittels der Rampen (12) servokraftwirksam zu dem Sperrsynchronring (4) hin oder zu dem Schaltrad (6) hin abstützt.

7. Synchronisationseinrichtung (1) nach Anspruch 6, **dadurch gekennzeichnet, dass** die Rampen (12) jeweils eine Flächennormale (f) mit einer zur Welle (W) axialen Richtungskomponente (fₐ) und einer zur Welle (W) umfänglichen Richtungskomponente (fᵤ) aufweisen.

8. Synchronisationseinrichtung (1) nach Anspruch 6 oder 7, **dadurch gekennzeichnet, dass** die Rampen (12) Teil zumindest einer Übertragungseinheit (19) mit zwei ineinander greifenden zumindest im Wesentlichen auf einem Radius angeordneten Übertragungselementen (19.1), einer radial zur Welle (W) beabstandete Öffnung (18) mit umfänglichen Innenseitenflächen (18.1) als Rampen (12) und einem radial zur Welle (W) beabstandeten Vorsprung (17) mit umfänglichen Außenseitenflächen (17.1) als Rampen (12), sind.

9. Synchronisationseinrichtung (1) nach Anspruch 8, **dadurch gekennzeichnet, dass** sich der Vorsprung (17) einer Übertragungseinheit (19) unter Ausbildung einer Steckverbindung radial und/oder axial in die ihm zugeordnete Öffnung (18) hinein erstreckt.

10. Synchronisationseinrichtung (1) nach Anspruch 8 oder 9, **dadurch gekennzeichnet, dass** der Vorsprung (17) laschenartig ausgebildet ist.

11. Synchronisationseinrichtung (1) nach einem der Ansprüche 8 bis 10, **dadurch gekennzeichnet, dass** zumindest zwei umfänglich gleich beabstandete Übertragungseinheiten (19) vorgesehen sind.

12. Synchronisationseinrichtung (1) nach einem der Ansprüche 6 bis 11, **dadurch gekennzeichnet, dass** im Kraftflussbereich (k) axial zwischen dem Sperrsynchronring (4) und dem Schaltrad (6) ein als Synchronring (13) ausgebildetes Bauteil (10) und axial zwischen den beiden Synchronringen (4, 13) ein als Zwischenkonus (15) ausgebildetes Bauteil (10) vorgesehen sind, wobei sich der Synchronring (13) zur Erzeugung der Servokraft (F_{R}) über Rampen (12) an dem Sperrsynchronring (4) abstützt und/oder der Zwischenkonus (15) zur Erzeugung der Servokraft (F_{R}) über Rampen (12) an dem Schaltrad (6) abstützt.

13. Synchronisationseinrichtung (1) nach einem der Ansprüche 6 bis 12 **dadurch gekennzeichnet, dass** der Sperrsynchronring eine erste Reibkonusfläche (5) aufweist und die Bauelementgruppe (11) als Bauelemente (11.1) ein Reibkonuselement (20) mit einer zweiten Reibkonusfläche (7) und ein Verstärkungselement (21) mit Reibflächen (22.1, 22.2) umfasst, wobei sich das Reibkonuselement (29) über Rampen (12) an dem Schaltrad (6) und mittels der zweiten Reibkonusfläche (7) an der ersten Reibkonusfläche (5) des Sperrsynchronrings (4) abstützt sowie sich das Verstärkungselement (21) mittels der Reibflächen (22.1, 22.2) in Servokraftrichtung (s) vorn an dem Reibkonusflächeelement (20) bzw. in Servokraftrichtung (s) hinten an dem Schaltrad (6) abstützt.

14. Synchronisationseinrichtung (1) nach Anspruch 13, **dadurch gekennzeichnet, dass** das Verstärkungselement (21) ringscheibenartig ausgebildet ist, wobei seine Reibflächen (22.1, 22.2) senkrecht zur Welle (W) angeordnet sind, und dass sich das Verstärkungselement (21) zur Erzeugung der Servokraft (Fₛ) über Rampen (12) an dem Sperrsynchronring (4) abstützt.

## Claims

1. Synchronization device (1) for a transmission, having a sliding sleeve (3), a blocking synchronizer ring (4) and a change wheel (6), wherein, in a force flow region (k) between the blocking synchronizer ring (4) and the change wheel (6), ramps (12) for producing a servo force (F_{S}) axial with respect to the shaft (W) in a servo force direction from the blocking synchronizer ring (4) toward the change wheel (6) are provided on at least one component part (10), wherein first ramps (12.1) for servo force production when downshifting from a higher gear are arranged at a first angle (ß₁) to the shaft (W), and second ramps (12.2) for servo force production when upshifting from a lower gear are arranged at a second angle (ß₂) to the shaft (W), **characterized in that** the first angle (ß₁) is unequal to the second angle (ß₂) and the first ramps are configured asymmetrically with respect to the second ramps.

2. Synchronization device (1) according to Claim 1, **characterized in that** the first angle (ß₁) is greater than the second angle (ß₂) when the change wheel (6) in the transmission is provided for a first gear.

3. Synchronization device (1) according to Claim 2, **characterized in that** the first angle (ß₁) is at least twice as great as the second angle (ß₂).

4. Synchronization device (1) according to one of Claims 1 to 3, **characterized in that** the first angle (ß₁) is less than the second angle (ß₂) when the change wheel (6) in a transmission is provided for a gear higher than the first gear.

5. Synchronization device (1) according to Claim 4, **characterized in that** the first angle (ß₁) is at least 5° less than the second angle (ß₂).

6. Synchronization device (1) according to one of Claims 1 to 5, **characterized in that** at least one component part (10) and/or one group (11) of component elements comprising at least one component element (11.1) is arranged between the blocking synchronizer ring (4) and the change wheel (6), wherein the component part (10) and/or the component element (11.1) of the group (11) of component elements is supported in the direction of the blocking synchronizer ring (4) or in the direction of the change wheel (6) with a servo force action by means of the ramps (12) in order to convert a circumferential force (F_{U}) acting on said component part (10) and/or component element (11.1) into the servo force (F_{S}).

7. Synchronization device (1) according to Claim 6, **characterized in that** the ramps (12) each have a surface normal (f) with a direction component (fₐ) axial with respect to the shaft (W) and a direction component (fᵤ) circumferential with respect to the shaft (W).

8. Synchronization device (1) according to Claim 6 or 7, **characterized in that** the ramps (12) are part of at least one transfer unit (19) with two interengaging transfer elements (19.1) arranged at least substantially on a radius, with an opening (18) spaced apart radially from the shaft (W) and having circumferential inner side faces (18.1) as ramps (12) and with a projection (17) spaced apart radially from the shaft (W) and having circumferential outer side faces (17.1) as ramps (12).

9. Synchronization device (1) according to Claim 8, **characterized in that** the projection (17) of a transfer unit (19) extends radially and/or axially into the opening (18) assigned thereto to form a plug-in connection.

10. Synchronization device (1) according to Claim 8 or 9, **characterized in that** the projection (17) is of tab-like design.

11. Synchronization device (1) according to one of Claims 8 to 10, **characterized in that** at least two transfer units (19) spaced apart circumferentially in a uniform manner are provided.

12. Synchronization device (1) according to one of Claims 6 to 11, **characterized in that** a component part (10) designed as a synchronizer ring (13) is provided axially between the blocking synchronizer ring (4) and the change wheel (6) in the force flow region (k), and a component part (10) designed as an intermediate cone (15) is provided axially between the two synchronizer rings (4, 13) in the force flow region (k), wherein the synchronizer ring (13) is supported on the blocking synchronizer ring (4) via ramps (12) in order to produce the servo force (F_{R}), and/or the intermediate cone (15) is supported on the change wheel (6) via ramps (12) in order to produce the servo force (F_{R}).

13. Synchronization device (1) according to one of Claims 6 to 12, **characterized in that** the blocking synchronizer ring has a first friction cone surface (5) and the group (11) of component elements comprises as component elements (11.1) a friction cone element (20) having a second friction cone surface (7) and an energizing element (21) having friction surfaces (22.1, 22.2), wherein the friction cone element (29) is supported on the change wheel (6) via ramps (12) and on the first friction cone surface (5) of the blocking synchronizer ring (4) via the second friction cone surface (7), and the energizing element (21) is supported at the front - in the servo force direction (s) - on the friction cone surface element (20) by means of the friction surfaces (22.1, 22.2) and is supported at the rear - in the servo force direction (s) - on the change wheel (6) by means of the friction surfaces (22.1, 22.2).

14. Synchronization device (1) according to Claim 13, **characterized in that** the energizing element (21) is designed in the manner of a ring-shaped disk, wherein the friction surfaces (22.1, 22.2) thereof are arranged perpendicularly to the shaft (W), and **in that** the energizing element (21) is supported on the blocking synchronizer ring (4) via ramps (12) in order to produce the servo force (F_{S}).

## Revendications

1. Système de synchronisation (1) pour une boîte de vitesses, avec un manchon de commutation (3), un anneau de blocage et de synchronisation (4) et une roue de commande (6), dans lequel il est prévu dans une zone de flux de force (k) entre l'anneau de blocage et de synchronisation (4) et la roue de commande (6) sur au moins un composant (10) des rampes (12) pour la production d'une servo-force (Fₛ) axiale par rapport à l'arbre (W) dans une direction de servo-force de l'anneau de blocage et de synchronisation (4) vers la roue de commande (6), dans lequel des premières rampes (12.1) pour la production d'une servo-force lors de la descente à partir d'un rapport supérieur sont disposées sous un premier angle (β₁) avec l'arbre (W) et des deuxièmes rampes (12.2) pour la production d'une servo-force lors de la montée à partir d'un rapport inférieur sont disposées sous un deuxième angle (β₂) avec l'arbre (W), **caractérisé en ce que** le premier angle (β₁) est différent du deuxième angle (β₂) et les premières rampes sont de forme asymétrique par rapport aux deuxièmes rampes.

2. Système de synchronisation (1) selon la revendication 1, **caractérisé en ce que** le premier angle (β₁) est plus grand que le deuxième angle (β₂), lorsque la roue de commande (6) est prévue pour un premier rapport dans la boîte de vitesses.

3. Système de synchronisation (1) selon la revendication 2, **caractérisé en ce que** le premier angle (β₁) est au moins deux fois plus grand que le deuxième angle (β₂).

4. Système de synchronisation (1) selon l'une quelconque des revendications 1 à 3, **caractérisé en ce que** le premier angle (β₁) est plus petit que le deuxième angle (β₂), lorsque la roue de commande (6) est prévue pour un rapport plus élevé que le premier rapport dans une boîte de vitesses.

5. Système de synchronisation (1) selon la revendication 4, **caractérisé en ce que** le premier angle (β₁) est au moins 5° plus petit que le deuxième angle (β₂).

6. Système de synchronisation (1) selon l'une quelconque des revendications 1 à 5, **caractérisé en ce qu'**au moins un composant (10) et/ou un groupe d'éléments de construction (11) avec au moins un élément de construction (11.1) est disposé entre l'anneau de blocage et de synchronisation (4) et la roue de commande (6), dans lequel le composant (10) et/ou l'élément de construction (11.1) du groupe d'éléments de construction (11) s'appuie au moyen des rampes (12) efficacement avec la servo-force en direction de l'anneau de blocage et de synchronisation (4) ou en direction de la roue de commande (6) pour convertir en une servo-force (Fₛ) une force périphérique (Fᵤ) agissant sur ce composant (10) ou sur cet élément de construction (11.1).

7. Système de synchronisation (1) selon la revendication 6, **caractérisé en ce que** les rampes (12) présentent respectivement une normale à la surface (f) avec une composante directionnelle (fₐ) axiale par rapport à l'arbre (W) et une composante directionnelle (fᵤ) périphérique par rapport à l'arbre (W).

8. Système de synchronisation (1) selon la revendication 6 ou 7, **caractérisé en ce que** les rampes (12) font partie au moins d'une unité de transmission (19) avec deux éléments de transmission (19.1) engagés l'un dans l'autre disposés au moins essentiellement sur un rayon, d'une ouverture (18) espacée radialement de l'arbre (W) avec des faces latérales intérieures périphériques (18.1) comme rampes (12) et d'une saillie (17) espacée radialement de l'arbre (W) avec des faces latérales extérieures (17.1) comme rampes (12).

9. Système de synchronisation (1) selon la revendication 8, **caractérisé en ce que** la saillie (17) d'une unité de transmission (19) s'étend radialement et/ou axialement dans l'ouverture qui lui est associée (18) en formant un assemblage enfichable.

10. Système de synchronisation (1) selon la revendication 8 ou 9, **caractérisé en ce que** la saillie (17) est réalisée sous forme de patte.

11. Système de synchronisation (1) selon l'une quelconque des revendications 8 à 10, **caractérisé en ce qu'**il est prévu au moins deux unités de transmission (19) également espacées en périphérie.

12. Système de synchronisation (1) selon l'une quelconque des revendications 6 à 11, **caractérisé en ce qu'**il est prévu dans la zone du flux de force (k), axialement entre l'anneau de blocage et de synchronisation (4) et la roue de commande (6), un composant (10) réalisé sous forme d'anneau de synchronisation (13) et axialement entre les deux anneaux de synchronisation (4, 13), un composant réalisé sous forme de cône intermédiaire (15), dans lequel l'anneau de synchronisation (13) s'appuie par des rampes (12) sur l'anneau de synchronisation (4) pour la production de la servo-force (F_{R}) et/ou le cône intermédiaire (15) s'appuie par des rampes (12) sur la roue de commande (6) pour la production de la servo-force (F_{R}).

13. Système de synchronisation (1) selon l'une quelconque des revendications 6 à 12, **caractérisé en ce que** l'anneau de blocage et de synchronisation présente une première face conique à friction (5) et le groupe d'éléments de construction (11) comprend comme éléments de construction (11.1) un élément conique à friction (20) avec une deuxième face conique à friction (7) et un élément de renforcement (21) avec des faces de friction (22.1, 22.2), dans lequel l'élément conique à friction (29) s'appuie par des rampes (12) sur la roue de commande (6) et au moyen de la deuxième face conique à friction (7) sur la première face conique à friction (5) de l'anneau de blocage et de synchronisation (4) et aussi l'élément de renforcement (21) s'appuie au moyen des faces de friction (22.1, 22.2), dans la direction de la servo-force (s) à l'avant sur l'élément de surface conique à friction (20) ou dans la direction de la servo-force (s) à l'arrière sur la roue de commande (6).

14. Système de synchronisation (1) selon la revendication 13, **caractérisé en ce que** l'élément de renforcement (21) est réalisé sous forme de disque annulaire, dans lequel ses faces de friction (22.1, 22.2) sont disposées perpendiculairement à l'arbre (W), et **en ce que** l'élément de renforcement (21) s'appuie par des rampes (12) sur l'anneau de blocage et de synchronisation (4) pour la production de la servo-force (Fₛ).
